# EUROPEAN PATENT APPLICATION

(11) **EP 1 970 491 A1**
(43) Date of publication of application: **17.09.2008**
(21) Application number: 07388015.5
(22) Date of filing: 16.03.2007
(51) Int. Cl.: E01C 9/08, F16B 15/06, E01F 9/011

(54) **A nail for use in securing a mesh structure and a method of securing a mesh structure**

(71) Applicant: Byggros A/S, 4300 Holbaek (DK)
(72) Inventor: Kjeld, Anders, 4500 Nykøbing Sjælland (DK)
(74) Representative: Nielsen, Henrik Sten

(57) **Abstract**

A nail (16) for use in securing a mesh structure (10) on a surface of a muddy, sandy or similar ground formation. The nail comprises a stem (28) defining a longitudinal axis, a pointing first end (26) and an opposite second end and having a substantially constant cross section. The nail further comprises a head (18) of a T-shaped configuration integrally connected to the stem at the second end thereof, and a plurality of barbs (40) extending outwardly from the stem and sloping rearwards from the stem.

## Description

The present invention relates to a nail for use in securing a mesh structure on a surface of a muddy, sandy or similar ground formation and further to a method for securing a mesh structure on a surface of a muddy, sandy or similar ground formation.

When placing a mesh structure on a surface of a muddy, sandy or similar ground formation, e.g. on a dirt road or the like, in order for ensuring that cars, trucks or other vehicles may drive on the area, there is a need for the mesh structure to be secured on the desired location or area. The soil or ground formation may require the device used for securing the mesh structure to provide a reliable hold in the ground formation.

Other nails or anchors may be found in publications such as US 3,645,163, US 4,606,983 or US 5,697,196. Reference is made to all of the above mentioned US patent publications, and all are hereby incorporated in the present specification by reference in their entirety for all purposes.

In a first aspect of the present invention a nail for use in securing a mesh structure on a surface of a muddy, sandy or similar ground formation is provided. The nail may comprise:
a stem defining a longitudinal axis, a pointing first end and an opposite second end and having a substantially constant cross section,
a head of a T-shaped configuration integrally connected to the stem at the second end thereof, and
a plurality of barbs extending outwardly from the stem and sloping rearwards from the stem.

The area on which the mesh structure is to be secured may e.g. be in a forest, dessert, tundra, marsh or any other area where there is a need for strengthening an area of the ground thereby allowing motorised vehicles to drive.

The mesh structure is laid out on the surface of the ground. The mesh structure may comprise a plurality of strings or bands forming the mesh structure. The strings or bands are typically arranged so that the strings or bands are orthogonal, i.e. they are positioned so that they define an angle of 90 degrees between them. Holes or apertures are then formed in between the bands or strings. The holes in the mesh structure preferably define a square, rectangular or rhombic geometry, alternatively combinations thereof.

The pointing or pointy first end of the stem is preferably the end of the nail that is used to penetrate the ground in which the nail is to be secured.

The stem of the nail has a substantially constant cross-section in the longitudinal direction. The stem may define geometry such as a cross, a square, a triangle, a circle, an ellipse or a combination of the above geometrical configurations. In alternative embodiments, the cross-section of the stem may include two or more parts each defining one of the above mentioned geometries.

The head preferably defines a T-shaped geometry, i.e. an oblong structure corresponding to two flat arms extending from the head. The head is preferably integrally connected to the stem at the second end thereof.

The nail may further include a plurality of barbs extending outwardly from the stem. The barbs may be constituted by substantially flat elements. The barbs preferably slopes rearwards from the stem, i.e. in the direction opposite of which the nail, or the body of the nail, penetrates the ground when mounting or securing the mesh structure.

In one embodiment of the present invention, the barbs may be arranged in sets of two individual barbs extending outwardly from the stem in directions symmetrically relative to the stem. In certain embodiments, the barbs may be positioned on the stem so that the distance between two neighbouring sets is substantially the same for every neighbouring set of sets.

The set of barbs may further define an angle between 30° and 60°, such as 40°-50°, preferably approximately 45° relative to the longitudinal direction of the stem. A set of barbs may be positioned so that the together define an angle between 30° and 110°, such as between 60° and 95°, such as approximately 90°.

In an advantageous embodiment of the present invention, barbs may be substantially non-bendable and/or non-flexible. The barbs may be rigid, but preferably not completely stiff, as the barbs may yield or bend slightly as the nail is being inserted into the ground. The barbs may also be subjected to stress, strain or other forces when a vehicle passes over the part of the mesh structure where the nail is situated.

In specific embodiments of the present invention the plurality constitutes an even figure in the range 6-24, e.g. 8-20, such as 10-16, preferably 12 or 14. The number of barbs may be varied depending on the length of the nail and the desired distance between neighbouring barbs in the longitudinal direction of the nail.

It is an object of the present invention to provide a nail wherein the head may have a cylindrical part and a plate-shaped part defining the T-shaped configuration. The plate-shaped part may be used to secure the mesh structure. The securing of the mesh structure may be achieved by positioning the plate-shaped part over one, or preferably two, of the bands or strands of the mesh structure when securing the mesh structure to the ground. In other embodiments of the present invention, the T-shaped configuration may be constituted by elements having another geometry, such as cylinders, bars or the like.

In a further advantageous embodiment of the present invention, the cylindrical part may constitute a hollow structure and the plate-shaped part may have a through-going hole communicating with the interior of the hollow structure. The through-going hole may be used for e.g. inserting a pole or the like e.g. for indicating the position of the mesh structure. This may be advantageous when the mesh structure may be covered by e.g. snow, leafs or other material, either periodically or increasingly over time.

In still further embodiments of the present invention, the plate-shaped part may be of an elongated configuration and having outer bent ends bent in the direction towards the first end of the stem. The bent ends are contemplated to increase the hold of the nail on the mesh structure when the nail is in the intended position. The bent ends may hold the mesh structure in place, seen relative to the surface of the mesh structure. The bent ends may decrease motion of the mesh structure in the plane substantially perpendicular to the longitudinal direction of the nail. Further, the bent ends may ensure that the strands or bands of the mesh structure is kept in place under the T-shaped configuration.

Additionally, the cylindrical part may have separate barbs extending outwardly from the cylindrical part and parallel with the plurality of barbs.

In additional embodiments the cylindrical part may have a transversal bore communication with the hollow structure for draining water therefrom. The transversal bore hole may function as a drainage hole draining the hollow structure of water. This may be advantageous during periods of changing weather conditions, especially during changes to and from frost and thaw. If an amount of water assembles in the hollow structure, and the water is not drained from the hollow structure, the change from liquid water to solid ice causes an expansion of the water, which may cause the hollow structure to break. This is contemplated to be avoided by the transversal bore. The transversal bore may also serve the purpose of fastening a plug or the like to the interior of the hollow structure. The nail may include one, two or even more transversal bores.

In order to provide a proper fixation and arresting of the nail relative to the mesh structure with which the nail is intended to be used, the head of the nail according to the first aspect of the present invention preferably has a pair of transversal ribs or distance elements extending parallel with said head and defining a transversal width somewhat smaller than the width of the strings of the mesh structure with which the nail is intended to be used and in addition, the nail according to the first aspect of the present invention further comprises a set of additional barbs extending transversally from said cylindrical part of said head and defining a transversal width substantially corresponding to or slightly exceeding the distance between the strength of the mesh structure with which the nail is intended to be used.

In order to prevent that the nail be destroyed after a short period of time due to exposure to rain and/or snow, the nail is preferably made from a corrosion resistant material such as a plastics material, e.g. PVC, PE, PP, POM or ABS or alternatively aluminium or coated steel or a combination of the above materials or similar materials.

A second aspect of the present invention relates to a method for securing a mesh structure on a surface of a muddy, sandy or similar ground formation, the method may comprise:
providing a mesh structure,
providing a plurality of nails comprising:
   a stem defining a longitudinal axis, a pointing first end and an opposite second end and having a substantially constant cross section,
   a head of a T-shaped configuration integrally connected to the stem at the second end thereof, and
   a plurality of barbs extending outwardly from the stem and sloping rearwards from the stem,
   positioning the mesh structure on the surface,
   fastening the mesh structure with the plurality of nails,
   the nails being positioned so that the T-shaped configuration extends over two or more strings of the mesh structure.

The mesh structure includes a multitude of openings or holes. The plurality of nails is preferably positioned in some of these holes. The nails may alternatively be positioned so that they extend over only one string or band or over 3 or more strings or bands of the mesh structure, e.g. when positioning a nail at an edge of the mesh structure.

In the method according to the second aspect of the present invention nails including any of the features of the nail according to the first aspect may be used.

As stated above, a pole, such as a pole made from a flexible material, if necessary including further indication means, such as a flag or other visual indicator, in a hollow interior such a nail.

### The present invention is now to be described with reference to the figures, in which:

Fig. 1 is a schematic illustration of a mesh structure whereon a vehicle may drive,
Fig. 2 is a schematic illustration of a nail securing a part of a mesh structure,
Fig. 3 is a schematic illustration of a nail securing a part of a mesh structure,
Fig. 4 is a schematic illustration of a nail according to the present invention, and
Fig. 5 is a schematic illustration of a plug for a nail according to the present invention.

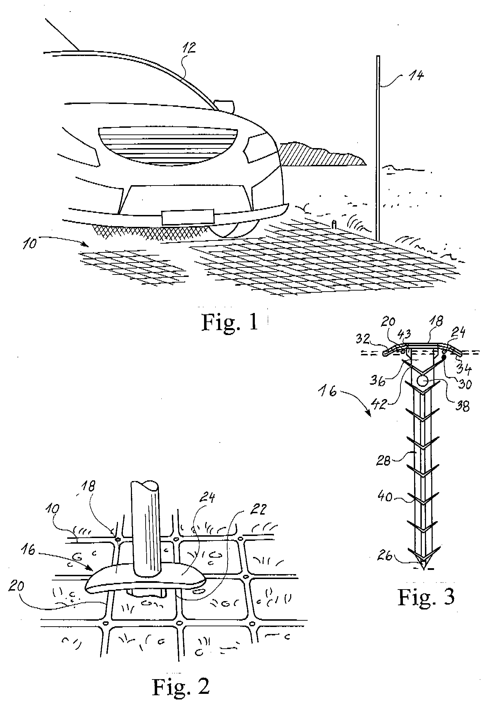

Fig. 1 schematically illustrates a mesh structure 10. The mesh structure has been positioned on the surface of a muddy, sandy or similar ground formation, where vehicles 12, such as cars, trucks, four-wheel driven vehicles, motorcycles or the like, may have difficulty driving. The configuration as shown may also be used in areas where it is not desirable to establish ordinary roads. The mesh structure 10 is laid out so that the vehicle may drive on it. The flatness of the mesh structure may depend on the area on which it is laid.

As an aid for the driver, a pole 14 is provided at the edge of the mesh structure 10. This may be advantageous in situations where the mesh structure 10 may be covered by e.g. snow, leafs or the like.

In Fig. 2 it is schematically illustrated how a nail 16 including a T-shaped head 18 configuration extends over two strings 20, 22 of the mesh structure 10.

The T-shaped head 18 includes a plate-shaped part 24 with bent ends. The bent ends is contemplated to reduce the risk of the strings 20 and 22 to move in a direction perpendicular to the nail 16 and thereby becoming loose. When the nail 16 is positioned as shown in the figure, the T-shaped head 18 presses the strings 20 and 22 of the mesh structure 10 towards the surface of the ground. This keeps the mesh structure in the intended position on the surface.

Fig. 3 is a schematic illustration of a nail 16 positioned in the ground. The nail 16 includes a pointy tip 26 at an end of a stem 28. At the opposite end 30 the T-shaped head 18 also shown in Fig. 2 is positioned. The T-shaped head 18 includes two bent ends 32, 34. The T-shaped head 18 is positioned so that is engages two strings 20 and 24 of the mesh structure.

The head 18 includes a hollow, cylindrical part 36, in which a through-going hole 38 is formed. The through-going hole 38 may serve the purpose of draining water from the hollow, cylindrical part 36. This is particular advantageous in situations where water, e.g. rain or melting water, assembles in the hollow part. If the water then stays in the hollow part when the temperature drops, the water will freeze, and thereby expand, which may cause the head of the nail 16 to break. This is contemplated to hinder the fixation of the mesh structure.

A plurality of barbs 40 is positioned along the longitudinal direction of the stem 28. The barbs extend outwardly from the stem 28. The barbs 40 may, as shown, extend in substantially the same direction as the plate-shaped part of the head.

The barbs 40 each define an angle of approximately 45 degrees relative to the stem. The barbs 40 may have a wedge shaped cross-section, i.e. they become thinner in the direction away from the stem 28. Preferably the barbs 40 are substantially non-bendable and/or non-flexible.

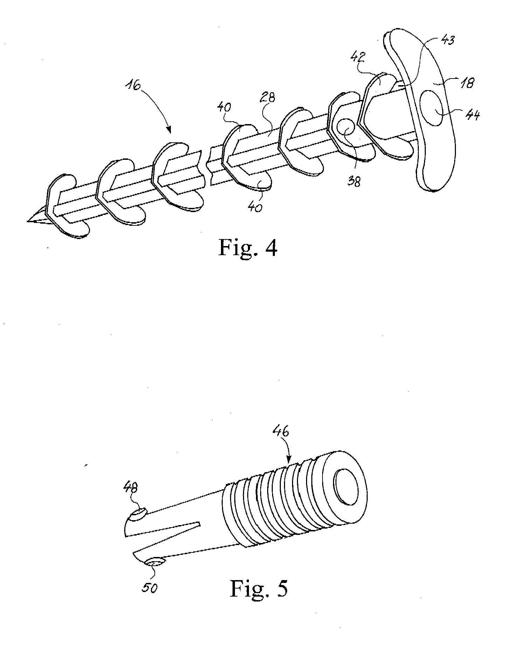

Like the stem 28, the cylindrical part 36 of the head 18 is also provided with a set of barbs, one of which is designated the reference numeral 42. The barbs 42 are, as is illustrated in Fig. 4, somewhat larger or defines a transversal width, somewhat larger than the width defined by the barbs 40 of the stem 28 as the barbs 42 preferably define a width slightly smaller than the width defined between the strings 20 and 22 of the mesh structure 10 shown in Fig. 2 and consequently serve the purpose of preventing the nail 16, in case the nail loosens its grip in the earth or ground formation, from being separated from the mesh structure 10. In addition, the cylindrical part 36 of the head 18 is provided with a pair of transversal ribs defining a transversal width somewhat smaller than the distance between the or the width between the strings 20 and 22 of the mesh structure 10 and consequently serve to guide the nail into a central position between the strings 20 and 22 of the mesh structure 10 and then to arrest the nail in its intentional position relative to the mesh structure 10 by means of the barbs 42 of the cylindrical part of the head 18.

The stem 28 defines a cross-shaped cross-section. In other embodiments, the cross-section of the stem 28 may have another geometry. The cross-section may be chosen to facilitate the penetration of specific ground types.

Fig. 4 is a schematic illustration of a perspective view of the nail 16. The nail 16 includes an aperture or opening 44 in communication with the interior of the head. This opening 44 may be used for securing a pole or stick, as described above and shown in Fig. 1. Alternatively, a plug 46, as illustrated in Fig. 5 may be inserted in the opening 44.

The plug 44 includes fastening arms with a part 48, 50 for inter engaging with the opening 38. A corresponding opening may be located on the side not viewable of the nail from fig. 4.

The nail 16 is preferably made from a non-corrosive material, such as a hard-plastic material or the like. The nail may also be made from a metallic material, such as stainless steel, aluminium or the like, alternatively an alloy.

## Claims

1. A nail for use in securing a mesh structure on a surface of a muddy, sandy or similar ground formation, said nail comprising:
a stem defining a longitudinal axis, a pointing first end and an opposite second end and having a substantially constant cross section,
a head of a T-shaped configuration integrally connected to said stem at said second end thereof, and
a plurality of barbs extending outwardly from said stem and sloping rearwards from said stem.

2. The nail according to claim 1, said stem having a cross section of a circle, an ellipse, a cross or a combination of the above geometrical configurations.

3. The nail according to any of the claims 1 or 2, said barbs being arranged in sets of two individual barbs extending outwardly from said stem in directions symmetrically relative to said stem.

4. The nail according to any of the claims 1-3, said barbs defining an angle between 30° and 60°, such as 40°-50°, preferably approximately 45° relative to said longitudinal direction.

5. The nail according to any of the claims 1-4, said barbs being substantially non-bendable and/or non-flexible.

6. The nail according to any of the claims 1-5, said plurality constituting an even figure in the range 6-24, e.g. 8-20, such as 10-16, preferably 12 or 14.

7. The nail according to any of the claims 1-6, said head having a cylindrical part and a plate-shaped part defining said T-shaped configuration.

8. The nail according to claim 7, said cylindrical part constituting a hollow structure and said plate-shaped part having a through-going hole communicating with the interior of said hollow structure.

9. The nail according to any of the claims 7 or 8, said plate-shaped part being of an elongated configuration and having outer bent ends bent in the direction towards said first end of said stem.

10. The nail according to any of the claims 7-9, said cylindrical part having separate barbs extending outwardly from said cylindrical part and parallel with said plurality of barbs.

11. The nail according to any of the claims 7-10, said cylindrical part having a transversal bore communication with said hollow structure for draining water therefrom.

12. The nail according to any of the claims 1-11, said head having a pair of transversal ribs or distance elements extending parallel with said head and defining a transversal width somewhat smaller than the width of the strings of the mesh structure with which the nail is intended to be used.

13. The nail according to claim 12, further comprising a set of additional barbs extending transversally from said cylindrical part of said head and defining a transversal width substantially corresponding to or slightly exceeding the distance between the strength of the mesh structure with which the nail is intended to be used.

14. The nail according to any of the preceding claims, the nail being made from a corrosion resistant material such as a plastics material, e.g. PVC, PE, PP, POM or ABS or alternatively aluminium or coated steel or a combination of the above materials or similar materials.

15. A method for securing a mesh structure on a surface of a muddy, sandy or similar ground formation, said method comprising:
providing a mesh structure,
providing a plurality of nails comprising:
a stem defining a longitudinal axis, a pointing first end and an opposite second end and having a substantially constant cross section,
a head of a T-shaped configuration integrally connected to said stem at said second end thereof, and
a plurality of barbs extending outwardly from said stem and sloping rearwards from said stem,
positioning said mesh structure on said surface,
fastening said mesh structure with said plurality of nails,
said nails being positioned so that said T-shaped configuration extends over two strings of said mesh structure.

16. The method according to claim 12, wherein said plurality of nails comprise any of the features of any of the claims 2-11.
